# EUROPEAN PATENT SPECIFICATION

(11) **EP 3 327 290 B1**
(45) Date of publication and mention of the grant of the patent: **15.05.2019**
(21) Application number: 17203898.6
(22) Date of filing: 27.11.2017
(51) Int. Cl.: F04C 28/08, H02P 21/18

(54) **ROTATIONAL SPEED CONTROL DEVICE, ROTARY COMPRESSOR SYSTEM, CONTROL SYSTEM, AND ROTATIONAL SPEED CONTROL METHOD**
DREHZAHLREGELUNGSVORRICHTUNG, ROTATIONSVERDICHTERSYSTEM, REGELUNGSSYSTEM UND DREHZAHLREGELUNGSVERFAHREN
DISPOSITIF DE COMMANDE DE VITESSE DE ROTATION, SYSTÈME À COMPRESSEUR ROTATIF, SYSTÈME DE COMMANDE ET PROCÉDÉ DE COMMANDE DE VITESSE DE ROTATION

(30) Priority: 29.11.2016 JP 2016231387
(43) Date of publication of application: 30.05.2018
(73) Proprietor: MITSUBISHI HEAVY INDUSTRIES THERMAL SYSTEMS, LTD., Tokyo 108-8215 (JP)
(72) Inventor: OGAWA, Makoto, TOKYO, 108-8215 (JP); SATO, Hajime, TOKYO, 108-8215 (JP); ESAKI, Ikuo, TOKYO, 108-8215 (JP); UNO, Masanari, TOKYO, 108-8215 (JP); SHIMAYA, Hirofumi, TOKYO, 108-8215 (JP); MIURA, Shigeki, TOKYO, 108-8215 (JP); SASAKI, Mikito, TOKYO, 108-8215 (JP); NII, Masahiro, TOKYO, 108-8215 (JP); SHIMIZU, Kenji, TOKYO, 108-8215 (JP)
(74) Representative: Cabinet Beau de Loménie

(56) References cited:
- WO-A1-2005/006534
- WO-A1-2005/029692
- US-A1- 2014 105 754
- US-A1- 2015 185 095
- US-B2- 8 672 655

## Description

### BACKGROUND OF THE INVENTION

### Field of the Invention

The present invention relates to a rotational speed control device, a rotary compressor system, a control system, and a rotational speed control method.

Priority is claimed on Japanese Patent Application No. 2016-231387, filed November 29, 2016.

### Description of Related Art

In the related art, in refrigerating devices, air conditioners, or the like, compressors configured to compress refrigerants to required pressures have been used. As one such compressor, a rotary compressor is known. A rotary compressor includes a cylindrical housing, a motor disposed in the housing, and a totally sealed rotary compression mechanism driven by the motor and configured to compress a refrigerant.

Note that Patent Document 1 discloses a control method capable of varying the torque generated due to a motor included in a rotary compressor in accordance with the load torque fluctuation to reduce the vibrations generated in the rotary compressor and minimizing a rotational speed variation of a rotating part.

### [Patent Document]

[Patent Document 1] Japanese Unexamined Patent Application, First Publication No. H1-247790
[Patent Document 2] WO 2005/006534 discloses a motor drive for compressor of air conditioner.
[Patent Document 3] US 8672655 discloses a scroll compressor having a pass hole for preventing over-compression under a low load condition.
[Patent Document 4] US 2015/0185095 discloses methods of torque estimation and compensation and systems thereof.
[Patent Document 5] WO 2005/029692 discloses a compressor driving unit and refrigerator using the same.

### SUMMARY OF THE INVENTION

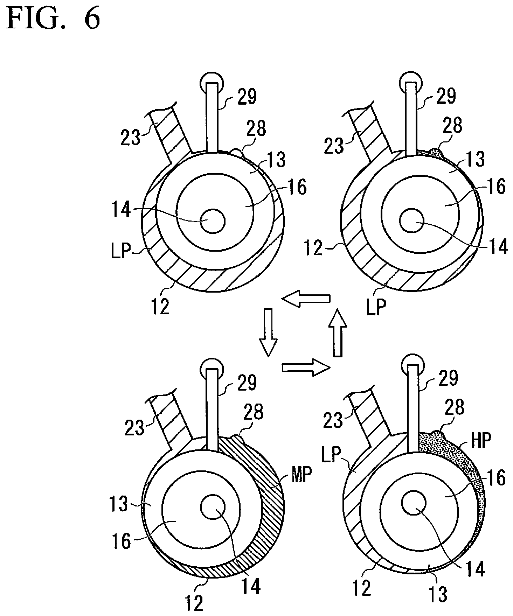

In a rotary compressor, a gas compression torque largely fluctuates during one compression process. For this reason, the fluctuation of a rotational speed of a crankshaft 16 occurs during one compression process. FIG. 6 illustrates this situation. FIG. 6 is a diagram describing the fluctuation of the gas compression torque in the rotary compressor. During one compression process, a piston rotor 13 eccentrically rotates in a space in a cylinder 12 (a cylinder chamber) from the state of the upper left diagram of FIG. 6 as illustrated in the states of the lower left diagram, the lower right diagram, the upper right diagram, and the upper left diagram. In FIG. 6, LP, HP, and MP indicate pressure states of a gaseous refrigerant in a space formed between the piston rotor 13 and the cylinder 12. LP, HP, and MP indicate a low-pressure state, a high-pressure state, and a middle-pressure state, respectively. In the state illustrated in the upper left diagram, a gas pressure is low and thus the piston rotor 13 is not subjected to much reaction force due to a compressed refrigerant gas. However, as the state moves to the states illustrated in the lower left diagram and the lower right diagram, a gas pressure of a space on a discharge port 28 side (a high-pressure chamber) rises from the middle pressure (MP) to the high pressure (HP). A rotational speed of the crankshaft 16 gradually becomes slower along with this, the crankshaft 16 receives a larger reaction force due to a compressed refrigerant gas as a pressure difference between the high-pressure chamber and a low-pressure chamber (a space on a suction port 23 side) is larger, and thus the crankshaft 16 rotates at a relatively low speed, for example, while the state moves from the state illustrated in the lower right diagram to the state illustrated in the upper right diagram. When the rotational speed of the crankshaft 16 decreases, it takes time for the rotation of the piston rotor 13. In other words, the transition from the state illustrated in the lower right diagram to the state illustrated in the upper right diagram is performed over a relatively long time. However, during the compression process illustrated in FIG. 6, the leakage of the refrigerant from the high-pressure chamber to the low-pressure chamber occurs through the clearance between the piston rotor 13 and the cylinders 12. An amount of leakage of the refrigerant increases as the pressure difference between the high-pressure chamber and the low-pressure chamber increases. As described above, when the pressure difference between the high-pressure chamber and the low-pressure chamber increases, it takes a long time to rotate. Therefore, in a process in which the pressure difference is large during one compression process, the refrigerant keeps leaking for a long time. As a result, a relatively large amount of refrigerant leaks. Thus, problems concerning the occurrence of recompression loss occur.

Therefore, an objective of the present invention is to provide a rotational speed control device, a rotary compressor system, a control system, and a rotational speed control method capable of solving the above-described problems.

A first aspect of the present invention is a rotational speed control device, including: an angle information acquisition unit configured to acquire an angle of rotation of a motor used to rotatably drive a crankshaft for driving a piston rotor used to compress a gas in a cylinder in a rotary compressor; a rotational speed-switching determination unit configured to compare a threshold value of an angle of rotation of the crankshaft set in advance to correspond to an amount of leakage of a refrigerant gas from a high-pressure chamber to a low-pressure chamber in the cylinder with the angle of rotation of the crankshaft based on the angle of rotation of the motor acquired by the angle information acquisition unit and determine whether to change a rotational speed of the motor; and a rotational speed command unit configured to change a rotational speed command value to the motor when the rotational speed-switching determination unit determines to change the rotational speed.

The rotational speed-switching determination unit in a second aspect of the present invention may determine to change the rotational speed of the motor when the angle of rotation of the crankshaft reaches a predetermined angle of rotation set between 180° and 360° when the angle of rotation of the crankshaft at a top dead center of the piston rotor is set to 0° and a rotational direction of the crankshaft is set to a positive angular position.

The rotational speed-switching determination unit in a third aspect of the present invention may determine to change the rotational speed of the motor when the angle of rotation of the crankshaft reaches an angle of rotation when a pressure difference of the refrigerant gas between the high-pressure chamber and the low-pressure chamber is a predetermined threshold value or more.

The rotational speed-switching determination unit in a fourth aspect of the present invention may determine to change the rotational speed of the motor when the angle of rotation of the crankshaft reaches an angle of rotation when a temperature difference between a temperature of the refrigerant on a discharge side of the rotary compressor and a temperature of the refrigerant on a suction side thereof is a predetermined threshold value or more.

The rotational speed-switching determination unit in a fifth aspect of the present invention may determine to change the rotational speed of the motor when the angle of rotation of the crankshaft reaches an angle of rotation when the leakage of the refrigerant gas from the high-pressure chamber to the low-pressure chamber is a predetermined threshold value or more.

The rotational speed-switching determination unit in a sixth aspect of the present invention may determine to change the rotational speed of the motor when the angle of rotation of the crankshaft reaches an angle of rotation when a volume ratio of the high-pressure chamber and the low-pressure chamber is a predetermined ratio.

The rotational speed-switching determination unit in a seventh aspect of the present invention may determine to change the rotational speed of the motor when the angle of rotation of the crankshaft reaches an angle of rotation when a reaction of a compressed refrigerant gas received by the piston rotor from the refrigerant gas of the high-pressure chamber is a predetermined threshold value or more.

The rotational speed-switching determination unit in an eighth aspect of the present invention may determine to change the rotational speed of the motor when the angle of rotation of the crankshaft reaches an angle of rotation when the rotational speed of the motor is a predetermined threshold value or less due to a reaction of a compressed refrigerant gas received by the piston rotor from the refrigerant gas of the high-pressure chamber.

The rotational speed command unit in a ninth aspect of the present invention may increase the rotational speed of the motor when the rotational speed-switching determination unit determines to change the rotational speed of the motor.

The rotational speed-switching determination unit in a tenth aspect of the present invention may determine to change the rotational speed of the motor when the angle of rotation of the crankshaft reaches an angle of rotation when the angle of rotation of the crankshaft is at a top dead center of the piston rotor, and the rotational speed command unit may decrease the rotational speed of the motor to a predetermined speed.

The rotational speed-switching determination unit in an eleventh aspect of the present invention may compare positional information of the piston rotor in the cylinder based on the angle of rotation of the motor with a threshold value set in advance to correspond to the amount of leakage of the refrigerant gas from the high-pressure chamber to the low-pressure chamber and determines whether to change the rotational speed of the motor.

The angle information acquisition unit in a twelfth aspect of the present invention may acquire an angle of rotation of the motor estimated by model reference adaptive system (MRAS) control.

The rotational speed-switching determination unit in a thirteenth aspect of the present invention may determine a change in the rotational speed of the motor on the basis of the threshold value of the angle of rotation set to the same number as the number of cylinders included in the rotary compressor during one compression process, and the rotational speed command unit may increase the rotational speed of the motor by the same number as the number of cylinders during one compression process on the basis of such a determination.

A fourteenth aspect of the present invention is a rotary compressor system, including: a rotary compressor; the rotational speed control device according to any one of the above aspects; and a sensorless vector control circuit configured to acquire a rotational speed command value output by the rotational speed control device and control rotation of a motor included in the rotary compressor.

In the rotary compressor system in a fifteenth aspect of the present invention, the sensorless vector control circuit may include a model reference adaptive system (MRAS) control circuit, estimate an angle of rotation and a rotational speed of the motor using the MRAS control circuit, and control rotation of the motor on the basis of the estimated angle of rotation and rotational speed of the motor.

A sixteenth aspect of the present invention is a control system used for controlling a rotary compressor. The control system includes: the rotational speed control device according to any one of the above aspects; and a sensorless vector control circuit configured to acquire a rotational speed command value output by the rotational speed control device and control rotation of a motor included in the rotary compressor.

A seventeenth aspect of the present invention is a rotational speed control method wherein a rotational speed control device: acquires an angle of rotation of a motor used to rotatably drive a crankshaft for driving a piston rotor used to compress a refrigerant gas in a cylinder in a rotary compressor, compares a threshold value of an angle of rotation of the crankshaft set in advance to correspond to an amount of leakage of the refrigerant gas from a high-pressure chamber to a low-pressure chamber in the cylinder with the angle of rotation of the crankshaft based on the acquired angle of rotation of the motor and determines whether to change the rotational speed of the motor; and changes a rotational speed command value to the motor when it is determined that the rotational speed is changed.

According to the present invention, in a compression process of a rotary compressor, it is possible to reduce the leakage of a refrigerant gas from a high-pressure chamber to a low-pressure chamber and improve the compression efficiency.

### BRIEF DESCRIPTION OF THE DRAWINGS

FIG. 1 is a vertical cross-sectional view of a rotary compressor according to an embodiment of the present invention.
FIG. 2 is a first diagram showing a control circuit of the rotary compressor according to the embodiment of the present invention.
FIG. 3 is a second diagram showing a control circuit of the rotary compressor according to the embodiment of the present invention.
FIG. 4 is a diagram showing a rotational speed control device of the rotary compressor according to the embodiment of the present invention.
FIG. 5 is a flowchart describing a rotational speed control device according to the embodiment of the present invention.
FIG. 6 is a diagram describing a compression process in the rotary compressor.

### DETAILED DESCRIPTION OF THE INVENTION

### <Embodiment >

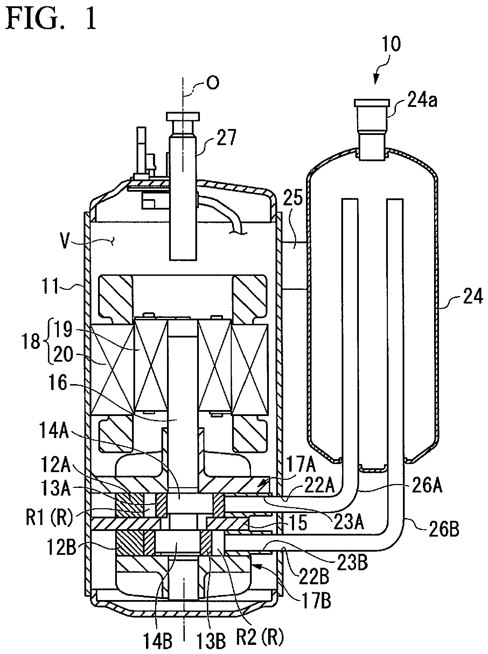

A rotary compressor system according to an embodiment of the present invention will be described below with reference to FIGS. 1 to 6.

FIG. 1 is a side cross-sectional view of a rotary compressor according to the embodiment of the present invention.

As shown in FIG. 1, a compressor 10 according to the embodiment includes a motor 18, a crankshaft 16 rotating along with the motor 18, piston rotors 13A and 13B eccentrically rotating along with the rotation of the crankshaft 16, cylinders 12A and 12B having compression chambers for accommodating the piston rotors 13A and 13B formed therein, and a housing 11 forming a discharge space V through which a compressed refrigerant is discharged and surrounding the cylinders 12A and 12B.

The compressor 10 is a so-called two-cylinder type rotary compressor in which the disk-shaped cylinders 12A and 12B are provided in two upper and lower stages in the cylindrical housing 11. The cylindrical piston rotors 13A and 13B having external forms smaller than inner sides of inner wall surfaces of the cylinders are arranged in the cylinders 12A and 12B. The piston rotors 13A and 13B are inserted and fixed into eccentric shaft parts 14A and 14B of a rotational axis along a central axis of the housing 11.

The upper-cylinder-side piston rotors 13A and the lower-cylinder-side piston rotor 13B are provided such that their phases differ from each other by 180°.

Also, a disk-shaped partition plate 15 is provided between the upper and lower cylinders 12A and 12B. A space R in the upper-side cylinder 12A and a lower space R are partitioned into compression chambers R1 and R2 by the partition plate 15 without communicating with each other.

The crankshaft 16 is supported to be rotatable about an axis O by an upper bearing part 17A fixed to the cylinder 12A and a lower bearing part 17B fixed to the cylinder 12B.

The crankshaft 16 has the eccentric shaft parts 14A and 14B offset in a direction perpendicular to a central line of the crankshaft 16. The eccentric shaft parts 14A and 14B are pivoted about a central axis of the crankshaft 16 so that the upper and lower piston rotors 13A and 13B rotate eccentrically in the cylinder 12A and 12B following such pivoting.

The crankshaft 16 protrudes upward (that is, in a direction in which the motor 18 is located when viewed from the compressor 10) from the upper bearing part 17A. A motor rotor 19 of the motor 18 configured to rotatably drive the crankshaft 16 is integrally provided on one end portion of the crankshaft 16 in an axis O direction. A stator 20 is fixed and provided on an inner circumferential surface of the housing 11 to face an outer circumferential portion of the motor rotor 19.

In the compressor 10, an accumulator 24 configured to perform gas-liquid separation on a refrigerant before supplying the refrigerant to the compressor 10 is fixed to the housing 11 via a stay 25. Intake pipes 26A and 26B configured to suction a refrigerant in the accumulator 24 into the compressor 10 are provided in the accumulator 24. Distal end portions of the intake pipes 26A and 26B are connected to suction ports 23A and 23B through openings 22A and 22B.

The compressor 10 takes the refrigerant from a suction port 24a of the accumulator 24 into the accumulator 24, performs gas-liquid separation on the refrigerant in the accumulator 24, and supplies the gas phase from the intake pipes 26A and 26B to the compression chambers R1 and R2 serving as internal spaces of the cylinder 12A and 12B via the suction ports 23A and 23B of the cylinder 12A and 12B.

Moreover, the piston rotors 13A and 13B eccentrically rotate so that the volumes of the compression chambers R1 and R2 gradually decrease and thus the refrigerant is compressed. The refrigerant passes around the motor 18 and is then discharged to a pipe 27 constituting a refrigeration cycle via a discharge port provided at an upper part.

Note that, when attention is paid to one of a compression chamber R1 and a compression chamber R2 and a compression process is performed in such a compression chamber, they are simply referred to as a compression chamber R, a cylinder 12, a piston rotor 13, an eccentric shaft part 14, and a suction port 23 in some cases. Furthermore, although the compression chamber R is partitioned into a high-pressure-side space and a low-pressure-side space by a blade 29 (FIG. 6), the high-pressure-side space is referred to as a high-pressure chamber and the low-pressure-side space is referred to as a low-pressure chamber.

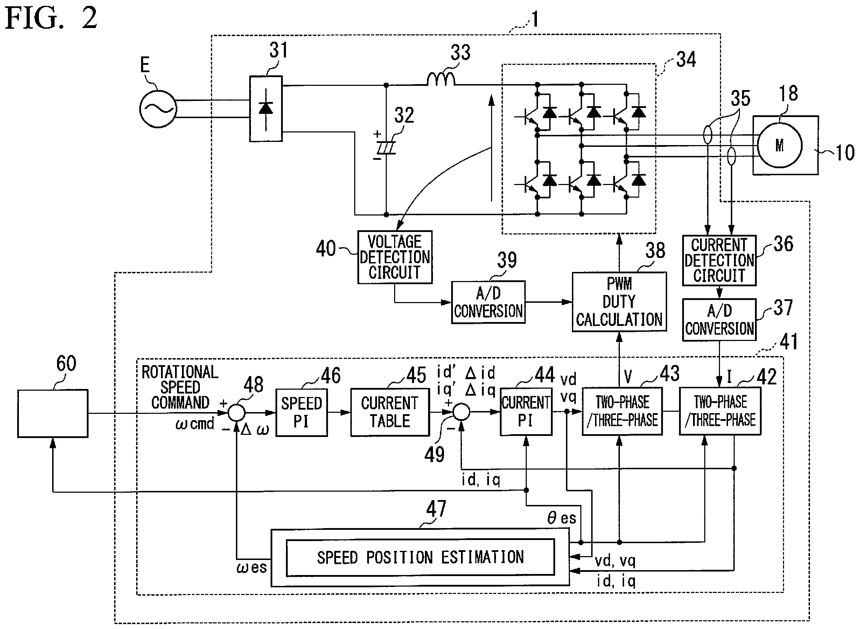

FIG. 2 is a first diagram showing a control circuit of the rotary compressor according to the embodiment of the present invention.

FIG. 2 illustrates a block diagram of a sensorless vector control circuit 1 configured to control the motor 18. The sensorless vector control circuit 1 shown in FIG. 2 includes a converter 31, a capacitor 32, a reactor 33, an inverter 34, a current sensor 35, a current detection circuit 36, an analog/digital (A/D) conversion circuit 37, a pulse width modulation (PWM) duty calculation circuit 38, an A/D conversion circuit 39, a voltage detection circuit 40, and a full vector control circuit 41. Furthermore, the full vector control circuit 41 includes a two-phase/three-phase conversion circuit 42, a two-phase/three-phase conversion circuit 43, a current PI control circuit 44, a current conversion table 45, a speed PI control circuit 46, a speed position estimation circuit 47, a subtractor 48, and a subtractor 49.

The converter 31 rectifies a three-phase alternating current (AC) input from a power system E. The capacitor 32 and the reactor 33 smooth the rectified voltage and generate a direct current (DC) voltage. The inverter 34 generates a three-phase drive voltage from the DC input voltage on the basis of a duty command value output by the PWM duty calculation circuit 38 and supplies a drive voltage to the motor 18 included in the compressor 10. Thus, the sensorless vector control circuit 1 drives the motor 18.

The current detection circuit 36 detects a current flowing through the motor 18 and outputs the detected current to the A/D conversion circuit 37. The A/D conversion circuit 37 converts the current detected by the current detection circuit 36 into a digital signal and outputs the converted signal to the full vector control circuit 41. In the full vector control circuit 41, the two-phase/three-phase conversion circuit 42 performs coordinate conversion (dq conversion) on a three-phase signal input from the A/D conversion circuit 37 and outputs the converted current values id and iq to the speed position estimation circuit 47. Note that the two-phase/three-phase conversion circuit 42 refers to a previous estimation value θes of a magnetic pole angle by the motor rotor 19, which will be described below. The speed position estimation circuit 47 receives current values id and iq and electric power command values vd and vq in a dq coordinate system output by the current PI control circuit 44 as inputs and calculates an estimation value ωes of a rotational speed of the motor 18 and an estimation value θes of a magnetic pole angle (an angle of a magnetic pole position) of the motor rotor 19 using, for example, a method called a model reference adaptive system (MRAS).

The subtractor 48 calculates a deviation Δω between a command value ωcmd of a rotational speed by a rotational speed control device 60 and an estimation value ωes of a rotational speed estimated by the speed position estimation circuit 47 and outputs the calculated deviation to the speed PI control circuit 46. The speed PI control circuit 46 calculates a torque command value for reducing the deviation (to 0) by PI control on the basis of Δω. The full vector control circuit 41 converts the torque command value into current command values id' and iq' on the basis of the current conversion table 45. The subtractor 49 calculates deviations Δid and Δiq between the current command values id' and iq' and id and iq output by the two-phase/three-phase conversion circuit 42 and outputs the calculated deviations to the current PI control circuit 44. The current PI control circuit 44 calculates voltage command values vd and vq for reducing the deviations by the PI control on the basis of the deviations Δid and Δiq. The current PI control circuit 44 outputs the voltage command values vd and vq to the two-phase/three-phase conversion circuit 43. The two-phase/three-phase conversion circuit 43 performs coordinate conversion of the voltage command values vd and vq from two phases to three phases by referring to the estimation value θes of the magnetic pole angle of the motor rotor 19 estimated by the speed position estimation circuit 47 and outputs a voltage command value V to the PWM duty calculation circuit 38. The PWM duty calculation circuit 38 receives the voltage command value V and a signal obtained by digitally converting the DC input voltage to the inverter 34 detected by the voltage detection circuit 40 using the A/D conversion circuit 39 as inputs and calculates a duty command value. The PWM duty calculation circuit 38 outputs the calculated duty command value to the inverter 34.

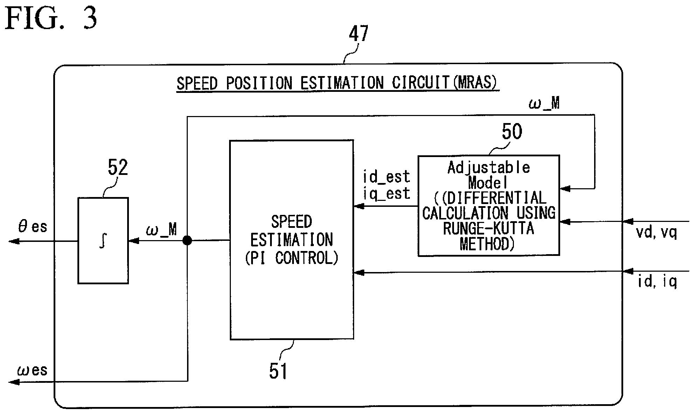

FIG. 3 is a second diagram showing the control circuit of the rotary compressor according to the embodiment of the present invention.

FIG. 3 illustrates a block diagram of the speed position estimation circuit 47. The speed position estimation circuit 47 includes a current-estimating circuit 50, a speed-estimating circuit 51, and an integrating circuit 52. The current-estimating circuit 50 receives the electric power command values vd and vq and an estimation value ω_M of the rotational speed of the motor rotor 19 estimated by the speed-estimating circuit 51 as inputs and estimates current estimation values id_est and iq_est on the basis of an adaptive model (an adjustable model) obtained by modeling the motor 18. The speed-estimating circuit 51 receives the current estimation values id_est and iq_est and id and iq as inputs and estimates a rotational speed (ω_M). The integrating circuit 52 integrates the estimation value ω_M of the rotational speed and calculates an estimation value θes of the magnetic pole angle of the motor rotor 19. The speed position estimation circuit 47 uses the estimation value ω_M of the rotational speed estimated by the speed-estimating circuit 51 as the estimation value ωes of the rotational speed and outputs the estimation value ω_M together with the estimation value θes of the magnetic pole angle of the motor rotor 19 calculated by the integrating circuit 52.

Since the inside of the compressor 10 becomes a high-temperature and high-pressure environment, it is difficult to provide a sensor configured to detect a position of the piston rotor 13. According to sensorless vector control (for example, MRAS control) using the control circuit shown in FIGS. 2 and 3, the rotational speed or the magnetic pole angle of the motor rotor 19 can be detected with high accuracy without using a sensor. Hereinafter, the rotational speed of the motor rotor 19 and the magnetic pole angle of the motor rotor 19 are referred to as the rotational speed of the motor 18 and an angle of rotation of the motor 18, respectively, in some cases.

As described above, the crankshaft 16 is rotationally driven due to the rotation of the motor 18 and the piston rotor 13 eccentrically rotates in the cylinder 12. In other words, the angle of rotation of the motor 18 and a position of the piston rotor 13 are in a predetermined positional relationship. Therefore, when the angle of rotation of the motor 18 can be estimated by the above-described sensorless vector control, the position of the piston rotor 13 that eccentrically rotates due to the motor 18 can also be estimated. In the embodiment, when the position of the piston rotor 13 is estimated with high accuracy by the sensorless vector control and the rotational speed of the piston rotor 13 reaches a position at which the rotational speed of the piston rotor 13 is delayed due to a reaction of a compressed refrigerant gas (a position at which an amount of leakage of the refrigerant gas is a predetermined threshold value or more) in the cylinder 12, the rotational speed of the motor 18 is increased and the fluctuation of the rotational speed of the crankshaft 16 is minimized. Furthermore, the time during which the refrigerant gas leakage occurs is shortened by quickly eccentrically rotating the piston rotor 13 and thus the leakage of the refrigerant gas from the high-pressure chamber to the low-pressure chamber is reduced.

Next, the rotational speed control device 60 configured to control the rotational speed of the motor 18 in accordance with the position of the piston rotor 13 will be described.

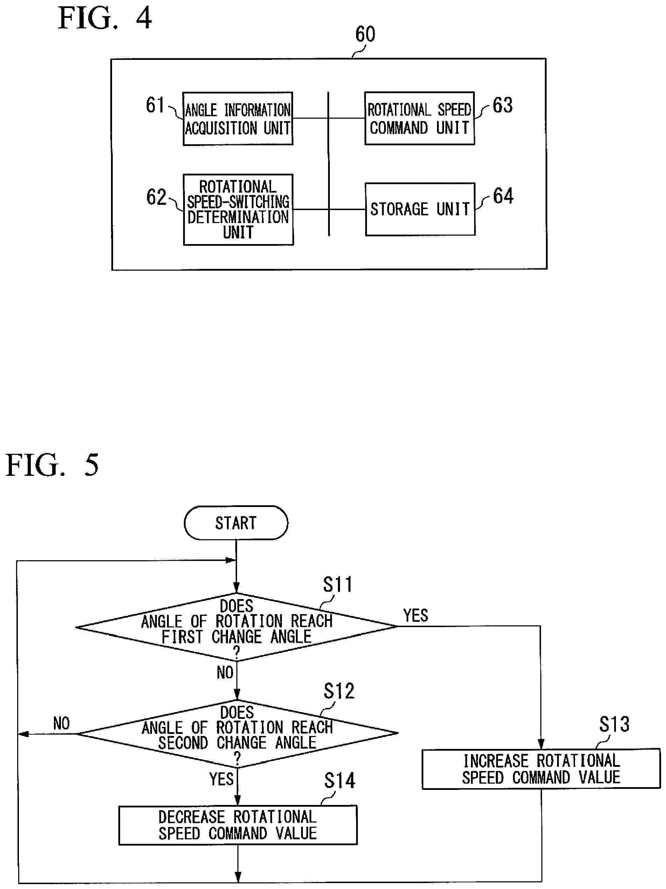

FIG. 4 is a diagram showing the rotational speed control device of the rotary compressor according to the embodiment of the present invention.

The rotational speed control device 60 is a computer such as a micro controller unit (MCU) configured to calculate a rotational speed command value of the motor 18.

As shown in FIG. 4, the rotational speed control device 60 includes an angle information acquisition unit 61, a rotational speed-switching determination unit 62, a rotational speed command unit 63, and a storage unit 64.

The angle information acquisition unit 61 acquires the angle of rotation of the motor 18.

The rotational speed-switching determination unit 62 calculates an angle of rotation of the crankshaft 16 based on the angle of rotation of the motor 18 (for example, the angle of rotation of the crankshaft 16 is the same as the angle of rotation of the motor 18) and determines whether to change the rotational speed of the motor 18 on the basis of a threshold value set in advance to correspond to the angle of rotation of the crankshaft 16 and the amount of leakage of the refrigerant gas. Alternatively, the rotational speed-switching determination unit 62 calculates positional information of the piston rotor 13 in the cylinder 12 and determines whether to change the rotational speed of the motor 18 on the basis of the positional information of the piston rotor 13 and a predetermined threshold value.

When the rotational speed-switching determination unit 62 determines to change the rotational speed, the rotational speed command unit 63 determines the changed rotational speed of the motor 18 and outputs the changed rotational speed command value to the full vector control circuit 41.

The storage unit 64 stores information such as a threshold value of the angle of rotation used for the determination by the rotational speed-switching determination unit 62, a rotational speed of the motor 18 after determining that the rotational speed-switching determination unit 62 changes the rotational speed, and a conversion table or a function used to calculate the angle of rotation of the crankshaft 16 or the positional information (for example, coordinate information or the like of the eccentric shaft part 14) of the piston rotor 13 in the cylinder 12 from the angle of rotation of the motor 18.

Next, control of the rotational speed using the rotational speed control device 60 will be described using FIG. 6. FIG. 6 is a diagram describing a compression process in the rotary compressor.

FIG. 6 is a horizontal cross-sectional view of a compressor groove of the compressor 10. The compressor groove includes a cylinder 12, a piston rotor 13, a blade 29, and the like. The piston rotor 13 is engaged with the crankshaft 16 and eccentrically rotates together with the eccentric shaft part 14. The blade 29 protrudes into a cylinder chamber (a space inside the cylinder 12) and a distal end of the blade 29 comes into press contact with an outer circumferential surface of the piston rotor 13. The cylinder chamber is partitioned into the low-pressure chamber communicating with the suction port 23 and the high-pressure chamber provided on the other side of the blade 29 and communicating with a discharge port 28 by the blade 29. As shown in FIG. 6, a low-pressure refrigerant gas is suctioned from the suction port 23 to the low-pressure chamber along with the eccentric rotation of the piston rotor 13. On the other hand, the refrigerant gas which is on the high-pressure chamber side suctioned at a time of previous eccentric rotation is compressed by the piston rotor 13 and the compressed refrigerant gas is discharged through the discharge port 28. At this time, after the pressure of the high-pressure chamber reaches a maximum value, since the refrigerant gas is discharged through the discharge port 28, the pressure of the high-pressure chamber remains constant.

While states of the upper left diagram, the lower left diagram, the lower right diagram, and the upper right diagram of FIG. 6 and the compression process are repeated, the angle information acquisition unit 61 continuously acquires angles of rotation of the motor 18 estimated by the speed position estimation circuit 47. Since the motor 18 (the motor rotor 19), the crankshaft 16, and the piston rotor 13 are rotatably driven in cooperation with each other, the angle of rotation of the crankshaft 16 or a position of the piston rotor 13 in the cylinder 12 can be calculated from the angle of rotation of the motor 18. The rotational speed-switching determination unit 62 calculates the angle of rotation of the crankshaft 16 (or the position of the piston rotor 13) on the basis of an estimation value of the angle of rotation of the motor 18 acquired by the angle information acquisition unit 61. The angle of rotation (a first change angle) of the crankshaft 16 or the positional information (a first change position) of the piston rotor 13 when a pressure difference between the high-pressure chamber and the low-pressure chamber is a predetermined threshold value or more is recorded on the storage unit 64 in advance. The rotational speed-switching determination unit 62 monitors whether the angle of rotation of the crankshaft 16 reaches the first change angle while the crankshaft 16 continues to rotate. For example, when the first change angle is set to an angle at a position in which the rotation state of the crankshaft 16 becomes the state of the lower right diagram and the angle of rotation of the crankshaft 16 reaches the angle (the first change angle) shown in the lower right diagram of FIG. 6, the rotational speed-switching determination unit 62 determines to change (increase) the rotational speed. For example, when the angle of rotation of the crankshaft 16 in a state in which the piston rotor 13 maximally pushes the blade 29 in the cylinder 12 (a top dead center) is set to 0° and a rotational direction of the crankshaft 16 is set to be a positive angular position in the first change angle, the angle of rotation is set to any angle (for example, 270°) within the angles 180° to 360° of rotation of the crankshaft 16.

When the rotational speed-switching determination unit 62 determines that the rotational speed is increased in the state of the lower right diagram of FIG. 6, the rotational speed command unit 63 outputs a higher rotational speed command value to the speed position estimation circuit 47. Thus, the state of the lower right diagram transitions to the state of the upper right diagram of FIG. 6 in a shorter time than in the related art and thus leakage of the refrigerant gas during this time can be prevented. The rotational speed-switching determination unit 62 continues to monitor the angle of rotation of the crankshaft 16 and determines to change (increase) the rotational speed when the angle of rotation reaches a second change angle. The rotational speed-switching determination unit 62 determines that the rotational speed is decreased (an increase in the rotational speed is canceled) upon reaching the state of the upper left diagram of FIG. 6 in a state in which the second change angle is set, for example, to 0°. Thus, the rotational speed command unit 63 outputs the original rotational speed command value before speeding up to the speed position estimation circuit 47. The piston rotor 13 rotates at a predetermined rotational speed while a pressure difference between the high-pressure chamber and the low-pressure chamber is a predetermined threshold value or less. As described above, when the pressure difference between the high-pressure chamber and the low-pressure chamber increases and the leakage of the refrigerant gas easily occurs, the rotational speed control device 60 according to the embodiment increases the rotational speed and performs control to return the rotation speed to a predetermined rotation speed when a difference in height of a gas pressure becomes small.

Here, the first change angle or the first change position can be determined in advance by experiments, calculations, or the like on the basis of the following idea.
1. An angle of rotation of the crankshaft 16 when a pressure difference of the refrigerant gas between the high-pressure chamber and the low-pressure chamber occurring due to the compression of the refrigerant gas inside the cylinder 12 by the piston rotor 13 is a predetermined threshold value or more or when the pressure difference is the largest is set to a first change angle. Alternatively, a position of the piston rotor 13 at that time is set to a first change position.
2. An angle of rotation of the crankshaft 16 when a pressure of the refrigerant gas in the high-pressure chamber is a predetermined threshold value (for example, a maximum value) is set to a first change angle. Alternatively, a position of the piston rotor 13 at that time is set to a first change position.
3. An angle of rotation of the crankshaft 16 when the leakage of the refrigerant gas from the high-pressure chamber to the low-pressure chamber is a predetermined threshold value or more is set to a first change angle. Alternatively, a position of the piston rotor 13 at that time is set to a first change position.
4. An angle of rotation of the crankshaft 16 when a volume ratio between the high-pressure chamber and the low-pressure chamber in a compression process of the refrigerant gas inside the cylinder 12 is a predetermined ratio is set to a first change angle. Alternatively, a position of the piston rotor 13 at that time is set to a first change position.
5. An angle of rotation of the crankshaft 16 when a reaction due to a compressed refrigerant gas received from the high-pressure chamber generated due to the compression of the refrigerant gas is a predetermined threshold value or more is set to a first change angle. Alternatively, a position of the piston rotor 13 at that time is set to a first change position.
6. An angle of rotation of the crankshaft 16 when a rotational speed of the motor 18 (the motor rotor 19) decreases due to a reaction received from a compressed refrigerant gas and an estimation value ωes of a rotational speed is a predetermined threshold value or less is set to a first change angle. Alternatively, a position of the piston rotor 13 at that time is set to a first change position.
7. An angle of rotation of the crankshaft 16 when a difference Δω between a rotational speed command value ωcmd to the motor 18 and an estimation value ωes of a rotational speed is a predetermined threshold value or more is set to a first change angle. Alternatively, a position of the piston rotor 13 at that time is set to a first change position.
8. An angle of rotation of the crankshaft 16 when the leakage of the refrigerant gas is most likely to occur on design, for example, when the piston rotor 13 is a position designed to minimize the clearance between the piston rotor 13 and an inner wall of the cylinder 12, is set to a first change angle. Alternatively, a position of the piston rotor 13 at that time is set to a first change position. When a range of an angle at which a rotational speed is increased together with a second change angle described below is expressed by (a first change position, a second change position), for example, the range thereof may be set to (180, 360), (225, 360), (270, 360), (320, 360), or the like.
9. An angle of rotation of the crankshaft 16 when a temperature difference between a temperature of the refrigerant on a discharge side and a temperature of the refrigerant on a suction side of the compressor 10 is a predetermined threshold value or more is set to a first change angle. Alternatively, a position of the piston rotor 13 at that time is set to a first change position. The temperature of the refrigerant on the discharge side of the compressor 10 corresponds to the pressure of the high-pressure chamber and the temperature of the refrigerant on the suction side of the compressor 10 corresponds to the pressure of the low-pressure chamber. Thus, the temperature of the refrigerant is measured by a temperature sensor on each of the discharge side and the suction side of the compressor 10 and such a temperature is converted into a pressure according to, for example, the Reference Fluid Thermodynamic and Transport Properties Database (REFPROP) of the National Institute of Science and Technology (NIST) or the like. A temperature difference between a temperature of the refrigerant corresponding to a pressure of the high-pressure chamber and a temperature of the refrigerant corresponding to a pressure of the low-pressure chamber when the pressure difference is a predetermined threshold value or more is acquired by applying the idea of the pressure difference of the refrigerant gas between the high-pressure chamber and the low-pressure chamber of 1 above. Moreover, an angle of rotation of the crankshaft 16 when such a temperature difference is reached is set to a first change angle. Note that, in the case of the determination using the temperature difference, control is performed to increase the rotational speed when temperature sensors are provided in pipes on the discharge side and the suction side of the compressor 10 and a temperature difference measured by the two temperature sensors is a threshold value or more even during the actual operation of the compressor 10.

Note that, with regard to the second change angle, for example, an angle of rotation of the crankshaft 16 at a top dead center (0° = 360°) is set as a second change angle. In addition, an angle of rotation of the crankshaft 16 when the amount of leakage of the refrigerant gas falls below a predetermined threshold value may be set to a second change angle. The same applies to a second change position indicating a position of the piston rotor 13.

Next, a flow of rotational speed control using the rotational speed control device 60 will be described.

FIG. 5 is a flowchart describing a rotational speed control device according to the embodiment of the present invention.

As a precondition, it is assumed that the rotational speed control device 60 outputs a rotational speed command with a predetermined magnitude to the speed position estimation circuit 47 and the rotary compressor 10A is driven by rotating the piston rotors 13A and 13B at a desired rotational speed. Furthermore, the angle information acquisition unit 61 continuously acquires the angle of rotation of the motor 18 (an estimation value θes of the magnetic pole angle of the motor rotor 19) from the speed position estimation circuit 47 and outputs such values to the rotational speed-switching determination unit 62.

First, the rotational speed-switching determination unit 62 converts the angle of rotation of the motor 18 acquired from the angle information acquisition unit 61 into the angle of rotation of the crankshaft 16 (for example, the angle of rotation of the motor 18 is the same as the angle of rotation of the crankshaft 16). The rotational speed-switching determination unit 62 compares the angle of rotation of the crankshaft 16 with the first change angle recorded on the storage unit 64 and determines whether the angle of rotation of the crankshaft 16 reaches the first change angle (Step S11). When it is determined that the angle of rotation thereof reaches the first change angle (Step S11; Yes), the rotational speed-switching determination unit 62 outputs such a determination result to the rotational speed command unit 63. The rotational speed command unit 63 increases the rotational speed command value output to the full vector control circuit 41 on the basis of the acquired determination result (Step S13). To be specific, the rotational speed command unit 63 reads a rotational speed command value when the speed is increased from the storage unit 64 and outputs the rotational speed command value to the full vector control circuit 41. Thus, the motor 18 rotates at a higher rotational speed than a previous rotational speed due to the sensorless vector control circuit exemplified in FIGS. 2 and 3.

On the other hand, when it is determined that the angle of rotation does not reach the first change angle (Step S11; No), the rotational speed-switching determination unit 62 compares the angle of rotation of the crankshaft 16 with the second change angle recorded on the storage unit 64 and determines whether the angle of rotation of the crankshaft 16 reaches the second change angle (Step S12). When it is determined that the angle of rotation does not reach the second change angle (Step S12; No), the process from Step S11 is repeated. When it is determined that the angle of rotation reaches the second change angle (Step S12; Yes), the rotational speed-switching determination unit 62 outputs such a determination result to the rotational speed command unit 63. Subsequently, the rotational speed command unit 63 decreases the rotational speed command value output to the full vector control circuit 41 on the basis of the acquired determination result (Step S14). To be specific, the rotational speed command unit 63 reads a predetermined (normal) rotational speed command value from the storage unit 64 and outputs the read rotational speed command value to the full vector control circuit 41. Thus, the motor 18 rotates at a predetermined rotational speed due to the sensorless vector control circuit. After that, the process from Step S11 is repeated during the operation of the compressor 10. Thus, the leakage of the refrigerant gas from the high-pressure chamber to the low-pressure chamber can be reduced by controlling an angular velocity variation of the crankshaft 16. Therefore, the recompression efficiency of the compressor 10 can be improved.

Note that, here, although the rotational speed control has been performed on the basis of the angle of rotation of the crankshaft 16, positional information in the cylinder 12 of the piston rotor 13 may be calculated on the basis of an estimation value θes of the magnetic pole angle so that the rotational speed control is performed by comparing the calculated positional information with the first change position or the second change position. Furthermore, the rotational speed control may be performed by comparing the estimation value θes of the magnetic pole angle of the motor rotor 19 with threshold values corresponding to the first change angle and the second change angle.

Also, the rotational speed-switching determination unit 62 determines that the piston rotor 13 reaches the first change position when the estimation value of the rotational speed becomes lower than a predetermined threshold value in a state in which the angle information acquisition unit 61 acquires an estimation value of the rotational speed from the speed position estimation circuit 47 instead of the angle of rotation of the motor 18 and thus the rotational speed command unit 63 may be instructed to increase the rotational speed.

In the above description, the rotational speed control has been given as an example by paying attention to the fluctuation in the gas pressure occurring in one cylinder 12. The above-described control method can be applied to a single-cylinder rotary compressor. In the case of the two-cylinder rotary compressor 10 illustrated in FIG. 1, the piston rotor 13A and the piston rotor 13B rotate with a phase difference of 180°. Therefore, in a two-cylinder rotary compressor 10, an angle of rotation which is 180° opposite to the first change angle set using the above-described method is set as a second first change angle. Furthermore, an angle of rotation obtained by adding the second change angle and 180° is set as a second second change angle. Similarly, in a three-cylinder rotary compressor 10, the first change angle and the second change angle are set with three phase differences of 120°. The same applies to a four-or-more-cylinder rotary compressor. In other words, in the case of a multi-cylinder rotary compressor, a determination is performed to increase the rotational speed on the basis of a threshold value set to the same number as the number of cylinders.

According to the embodiment, the rotational speed is controlled by accurately estimating the angle of rotation of the motor 18 using the sensorless vector control (MRAS control) so that the fluctuation of the eccentric rotation speed of the piston rotor 13 can be minimized. For this reason, it is possible to maintain (or increase) the rotational speed and thus reduce the leakage of the refrigerant gas even when the pressure difference of the refrigerant gas between the high-pressure chamber and the low-pressure chamber increases and thus the rotational speed decreases in the related art. Thus, it is possible to reduce the recompression loss and improve the efficiency of the rotary compressor.

Note that various motors such as a permanent magnet synchronous motor and an induction motor can be applied as the motor 18. Furthermore, the rotational speed control according to the embodiment can be applied to a multi-cylinder rotary compressor. Sensorless vector control other than MRAS control may be applied to the control circuit according to the embodiment.

In addition, the constituent elements in the above-described embodiment can be appropriately replaced with well-known constituent elements without departing from the scope of the present invention which is defined by the claims. Furthermore, the technical scope of the present invention is not limited to the above-described embodiment and various modifications can be performed without departing from the scope of the present invention which is defined by the claims. Note that the threshold values set in advance to correspond to the first change angle, the second change angle, the first change position, the second change position, and the amount of leakage of the refrigerant gas from the high-pressure chamber to the low-pressure chamber in the cylinder are exemplified. Note that the rotary compressor system includes the rotational speed control device 60, the sensorless vector control circuit 1, and the rotary compressor 10. Moreover, a control system includes the rotational speed control device 60 and the sensorless vector control circuit 1. The rotary compressor system according to the embodiment is used in, for example, an air conditioner. The speed position estimation circuit 47 is an example of an MRAS control circuit.

While preferred embodiments of the invention have been described and illustrated above, it should be understood that these are exemplary of the invention and are not to be considered as limiting. Accordingly, the invention is not to be considered as being limited by the foregoing description, and is only limited by the scope of the appended claims.

### EXPLANATION OF REFERENCES

1 Sensorless vector control circuit
10 Compressor
11 Housing
12A, 12B Cylinder
13A, 13B Piston rotor
16 Crankshaft
18 Motor
22A, 22B Opening
23A, 23B Suction port
24 Accumulator
25 Stay
26A, 26B Intake pipe
31 Converter
32 Capacitor
33 Reactor
34 Inverter
35 Current sensor
36 Current detection circuit
37 A/D conversion circuit
38 PWM duty calculation circuit
39 A/D conversion circuit
40 Voltage detection circuit
41 Full vector control circuit
42, 43 Two-phase/three-phase conversion circuit
44 Current PI control circuit
45 Current conversion table
46 Speed PI control circuit
47 Speed position estimation circuit
48 Subtractor
49 Subtractor
50 Current-estimating circuit
51 Speed-estimating circuit
52 Integrating circuit
61 Angle information acquisition unit
62 Rotational speed-switching determination unit
63 Rotational speed command unit
64 Storage unit

## Claims

1. A rotational speed control device (60), comprising:
an angle information acquisition unit (61) configured to acquire an angle of rotation of a motor (18) used to rotatably drive a crankshaft (16) for driving a piston rotor (13A, 13B) used to compress a gas in a cylinder (12A, 12B) in a rotary compressor (10);
a rotational speed command unit (63) configured to change a rotational speed command value (ωcmd) to the motor,
and **characterized by** further comprising
a rotational speed-switching determination unit (62) configured to determine to change the rotational speed of the motor (18) when the angle of rotation of the crankshaft (16) based on the angle of rotation of the motor (18) acquired by the angle information acquisition unit reaches a predetermined threshold value of an angle of rotation of the crankshaft (16) set corresponding to an increase in the amount of leakage of a refrigerant gas from a high-pressure chamber to a low-pressure chamber in the cylinder during one rotation of the crankshaft (16); and
the rotational speed command unit (63) changes the rotational speed command value to the motor (18) when the rotational speed-switching determination unit determines to change the rotational speed.

2. The rotational speed control device (60) according to Claim 1, wherein the rotational speed-switching determination unit (62) determines to change the rotational speed of the motor (18) when the angle of rotation of the crankshaft (16) reaches a predetermined angle of rotation set between 180° and 360° when the angle of rotation of the crankshaft at a top dead center of the piston rotor (13A, 13B) is set to 0° and a rotational direction of the crankshaft is set to a positive angular position.

3. The rotational speed control device (60) according to Claim 1, wherein the rotational speed-switching determination unit (62) determines to change the rotational speed of the motor (18) when the angle of rotation of the crankshaft (16) reaches an angle of rotation when a pressure difference of the refrigerant gas between the high-pressure chamber and the low-pressure chamber is a predetermined threshold value or more.

4. The rotational speed control device (60) according to Claim 1, wherein the rotational speed-switching determination unit (62) determines to change the rotational speed of the motor (18) when the angle of rotation of the crankshaft (16) reaches an angle of rotation when a temperature difference between a temperature of the refrigerant on a discharge side of the rotary compressor (10) and a temperature of the refrigerant on a suction side thereof is a predetermined threshold value or more.

5. The rotational speed control device (60) according to Claim 1, wherein the rotational speed-switching determination unit (62) determines to change the rotational speed of the motor (18) when the angle of rotation of the crankshaft (16) reaches an angle of rotation when the leakage of the refrigerant gas from the high-pressure chamber to the low-pressure chamber is a predetermined threshold value or more.

6. The rotational speed control device (60) according to Claim 1, wherein the rotational speed-switching determination unit (62) determines to change the rotational speed of the motor (18) when the angle of rotation of the crankshaft (16) reaches an angle of rotation when a volume ratio of the high-pressure chamber and the low-pressure chamber is a predetermined ratio.

7. The rotational speed control device (60) according to Claim 1, wherein the rotational speed-switching determination unit (62) determines to change the rotational speed of the motor (18) when the angle of rotation of the crankshaft (16) reaches an angle of rotation when a reaction of a compressed refrigerant gas received by the piston rotor (13A, 13B) from the refrigerant gas of the high-pressure chamber is a predetermined threshold value or more.

8. The rotational speed control device (60) according to Claim 1, wherein the rotational speed-switching determination unit (62) determines to change the rotational speed of the motor (18) when the angle of rotation of the crankshaft (16) reaches an angle of rotation when the rotational speed of the motor is a predetermined threshold value or less due to a reaction of a compressed refrigerant gas received by the piston rotor (13A, 13B) from the refrigerant gas of the high-pressure chamber.

9. The rotational speed control device (60) according to any one of Claims 1 to 8, wherein the rotational speed command unit (63) increases the rotational speed of the motor (18) when the rotational speed-switching determination unit (62) determines to change the rotational speed of the motor.

10. The rotational speed control device (60) according to any one of Claims 1 to 9, wherein the rotational speed-switching determination unit (62) determines to change the rotational speed of the motor (18) when the angle of rotation of the crankshaft (16) reaches an angle of rotation when the angle of rotation of the crankshaft is at a top dead center of the piston rotor (13A, 13B), and
the rotational speed command unit (63) decreases the rotational speed of the motor to a predetermined speed.

11. The rotational speed control device (60) according to any one of Claims 1 to 10, wherein the rotational speed-switching determination unit (62) compares positional information of the piston rotor (13A, 13B) in the cylinder (12A, 12B) based on the angle of rotation of the motor (18) with a threshold value set in advance to correspond to the amount of leakage of the refrigerant gas from the high-pressure chamber to the low-pressure chamber and determines whether to change the rotational speed of the motor.

12. The rotational speed control device (60) according to any one of Claims 1 to 11, wherein the angle information acquisition unit (61) acquires an angle of rotation of the motor (18) estimated by model reference adaptive system (MRAS) control.

13. The rotational speed control device (60) according to any one of Claims 1 to 12, wherein the rotational speed-switching determination unit (62) determines a change in the rotational speed of the motor (18) on the basis of the threshold value of the angle of rotation set to the same number as the number of cylinders (12A, 12B) included in the rotary compressor (10) during one compression process, and
the rotational speed command unit (63) increases the rotational speed of the motor by the same number as the number of cylinders during one compression process on the basis of such a determination.

14. A rotary compressor system, comprising:
a rotary compressor (10);
the rotational speed control device (60) according to any one of Claims 1 to 13; and
a sensorless vector control circuit (1) configured to acquire a rotational speed command value (ωcmd) output by the rotational speed control device and control rotation of a motor (18) included in the rotary compressor.

15. The rotary compressor system according to Claim 14, wherein the sensorless vector control circuit (1) includes a model reference adaptive system (MRAS) control circuit, and is configured to estimate an angle of rotation and a rotational speed of the motor (18) using the MRAS control circuit, and controls rotation of the motor on the basis of the estimated angle of rotation (θes) and rotational speed (ω_M) of the motor.

16. A control system used for controlling a rotary compressor (10), the control system comprising:
the rotational speed control device (60) according to any one of Claims 1 to 13; and
a sensorless vector control circuit (1) configured to acquire a rotational speed command value (ωcmd) output by the rotational speed control device and control rotation of a motor included in the rotary compressor.

17. A rotational speed control method wherein a rotational speed control device (60):
acquires an angle of rotation of a motor (18) used to rotatably drive a crankshaft (16) for driving a piston rotor (13A, 13B) used to compress a refrigerant gas in a cylinder (12A, 12B) in a rotary compressor (10),changes a rotational speed command value (ωcmd) to the motor according to the rotational angle of the motor (18),
**characterized by** determining to change the rotational speed of the motor (18) when the angle of rotation of the crankshaft (16) according to the acquired angle of rotation of the motor (18) reaches a predetermined threshold value of an angle of rotation of the crankshaft (16) set corresponding to an increase in the amount of leakage of a refrigerant gas from a high-pressure chamber to a low-pressure chamber in the cylinder during one rotation of the crankshaft (16); and
changes the rotational speed command value (ωcmd) to the motor when it is determined to change the rotational speed.

## Patentansprüche

1. Drehzahlregelungsvorrichtung (60), umfassend:
eine Winkelinformations-Erfassungseinheit (61), konfiguriert zum Erfassen eines Drehwinkels eines Motors (18), der zum drehbaren Antreiben einer Kurbelwelle (16) zum Antreiben eines Kolbenrotors (13A, 13B) verwendet wird, der zum Verdichten eines Gases in einem Zylinder (12A, 12B) in einem Rotationsverdichter (10) verwendet wird;
eine Drehzahlbefehlseinheit (63), konfiguriert zum Ändern eines Drehzahlbefehlswerts (ωcmd) an den Motor,
und **dadurch gekennzeichnet, dass** sie ferner umfasst:
eine Drehzahlumschaltbestimmungseinheit (62), konfiguriert, um zu bestimmen, dass eine Drehzahl des Motors (18) geändert wird, wenn der Drehwinkel der Kurbelwelle (16), anhand des durch die Winkelinformations-Erfassungseinheit erfassten Drehwinkels des Motors (18), einen im Voraus bestimmten Schwellenwert eines Drehwinkels der Kurbelwelle (16) erreicht, der entsprechend einem Anstieg der Austrittsmenge eines Kältemittelgases aus einer Hochdruckkammer zu einer Niederdruckkammer im Zylinder während einer Umdrehung der Kurbelwelle (16) eingestellt ist; und
die Drehzahlbefehlseinheit (63) den Drehzahlbefehlswert an den Motor (18) ändert, wenn die Drehzahlumschaltbestimmungseinheit ein Ändern der Drehzahl bestimmt.

2. Drehzahlregelungsvorrichtung (60) nach Anspruch 1, wobei die Drehzahlumschaltbestimmungseinheit (62) bestimmt, die Drehzahl des Motors (18) zu ändern, wenn der Drehwinkel der Kurbelwelle (16) einen im Voraus bestimmten Drehwinkel erreicht, der auf zwischen 180° und 360° eingestellt ist, wenn der Drehwinkel der Kurbelwelle an einem oberen Totpunkt des Kolbenrotors (13A, 13B) auf 0° eingestellt ist und eine Drehrichtung der Kurbelwelle auf eine positive Winkelposition eingestellt ist.

3. Drehzahlregelungsvorrichtung (60) nach Anspruch 1, wobei die Drehzahlumschaltbestimmungseinheit (62) bestimmt, die Drehzahl des Motors (18) zu ändern, wenn der Drehwinkel der Kurbelwelle (16) einen Drehwinkel erreicht, wenn eine Druckdifferenz des Kältemittelgases zwischen der Hochdruckkammer und der Niederdruckkammer einen im Voraus bestimmten Schwellenwert oder mehr aufweist.

4. Drehzahlregelungsvorrichtung (60) nach Anspruch 1, wobei die Drehzahlumschaltbestimmungseinheit (62) bestimmt, die Drehzahl des Motors (18) zu ändern, wenn der Drehwinkel der Kurbelwelle (16) einen Drehwinkel erreicht, wenn eine Temperaturdifferenz zwischen einer Temperatur des Kältemittels auf einer Auslassseite des Rotationsverdichters (10) und einer Temperatur des Kältemittels auf einer Ansaugseite davon einen im Voraus bestimmten Schwellenwert oder mehr aufweist.

5. Drehzahlregelungsvorrichtung (60) nach Anspruch 1, wobei die Drehzahlumschaltbestimmungseinheit (62) bestimmt, die Drehzahl des Motors (18) zu ändern, wenn der Drehwinkel der Kurbelwelle (16) einen Drehwinkel erreicht, wenn der Austritt des Kältemittelgases aus der Hochdruckkammer in die Niederdruckkammer einen im Voraus bestimmten Schwellenwert oder mehr aufweist.

6. Drehzahlregelungsvorrichtung (60) nach Anspruch 1, wobei die Drehzahlumschaltbestimmungseinheit (62) bestimmt, die Drehzahl des Motors (18) zu ändern, wenn der Drehwinkel der Kurbelwelle (16) einen Drehwinkel erreicht, wenn ein Volumenverhältnis der Hochdruckkammer zur Niederdruckkammer ein im Voraus bestimmtes Verhältnis ist.

7. Drehzahlregelungsvorrichtung (60) nach Anspruch 1, wobei die Drehzahlumschaltbestimmungseinheit (62) bestimmt, die Drehzahl des Motors (18) zu ändern, wenn der Drehwinkel der Kurbelwelle (16) einen Drehwinkel erreicht, wenn eine Reaktion eines verdichteten Kältemittelgases, das durch den Kolbenrotor (13A, 13B) vom Kältemittelgas der Hochdruckkammer empfangen wird, einen im Voraus bestimmten Schwellenwert oder mehr aufweist.

8. Drehzahlregelungsvorrichtung (60) nach Anspruch 1, wobei die Drehzahlumschaltbestimmungseinheit (62) bestimmt, die Drehzahl des Motors (18) zu ändern, wenn der Drehwinkel der Kurbelwelle (16) einen Drehwinkel erreicht, wenn, aufgrund einer Reaktion eines verdichteten Kältemittelgases, die durch den Kolbenrotor (13A, 13B) vom Kältemittelgas der Hochdruckkammer empfangen wird, die Drehzahl des Motors ein im Voraus bestimmter Schwellenwert oder niedriger ist.

9. Drehzahlregelungsvorrichtung (60) nach einem der Ansprüche 1 bis 8, wobei die Drehzahlbefehlseinheit (63) die Drehzahl des Motors (18) erhöht, wenn die Drehzahlumschaltbestimmungseinheit (62) bestimmt, die Drehzahl des Motors zu ändern.

10. Drehzahlregelungsvorrichtung (60) nach einem der Ansprüche 1 bis 9, wobei die Drehzahlumschaltbestimmungseinheit (62) bestimmt, die Drehzahl des Motors (18) zu ändern, wenn der Drehwinkel der Kurbelwelle (16) einen Drehwinkel erreicht, wenn der Drehwinkel der Kurbelwelle einem oberen Totpunkt des Kolbenrotors (13A, 13B) entspricht, und
die Drehzahlbefehlseinheit (63) die Drehzahl des Motors auf eine im Voraus bestimmte Geschwindigkeit herabsetzt.

11. Drehzahlregelungsvorrichtung (60) nach einem der Ansprüche 1 bis 10, wobei die Drehzahlumschaltbestimmungseinheit (62) Positionsinformation des Kolbenrotors (13A, 13B) im Zylinder (12A, 12B), anhand des Drehwinkels des Motors (18), mit einem Schwellenwert vergleicht, der im Voraus eingestellt ist, um der Austrittsmenge des Kältemittelgases von der Hochdruckkammer an die Niederdruckkammer die zu entsprechen, und bestimmt, ob die Drehzahl des Motors geändert werden soll.

12. Drehzahlregelungsvorrichtung (60) nach einem der Ansprüche 1 bis 11, wobei die Winkelinformations-Erfassungseinheit (61) einen Drehwinkel des Motors (18) erfasst, der durch die Steuerung eines modellbezogenen adaptiven Systems (MRAS) geschätzt wird.

13. Drehzahlregelungsvorrichtung (60) nach einem der Ansprüche 1 bis 12, wobei die Drehzahlumschaltbestimmungseinheit (62), anhand des Schwellenwerts des Drehwinkels, der auf die gleiche Anzahl wie die Anzahl von Zylindern (12A, 12B) eingestellt ist, die während eines Verdichtungsvorgangs im Rotationsverdichter (10) enthalten ist, eine Änderung der Drehzahl des Motors (18) bestimmt, und
die Drehzahlbefehlseinheit (63), anhand eines solchen Bestimmens, die Drehzahl des Motors um die gleiche Anzahl wie Anzahl Zylinder während eines Verdichtungsvorgangs erhöht.

14. Rotationsverdichtersystem, umfassend:
einen Rotationsverdichter (10);
die Drehzahlregelungsvorrichtung (60) nach einem der Ansprüche 1 bis 13; und
eine sensorlose Vektorsteuerschaltung (1), die konfiguriert ist, um einen Drehzahlbefehlswert (ωcmd) zu erfassen, der von der Drehzahlregelungsvorrichtung ausgegeben wird, und eine Drehzahl eines im Rotationsverdichter enthaltenen Motors (18) zu steuern.

15. Rotationsverdichtersystem nach Anspruch 14, wobei die sensorlose Vektorsteuerschaltung (1) eine Steuerschaltung eines modellbezogenen adaptiven Systems (MRAS) enthält und konfiguriert ist, anhand des geschätzten Drehwinkels (θes) und der Drehzahl (ω_M) des Motors, zum Schätzen eines Drehwinkels und einer Drehzahl des Motors (18) unter Verwendung der MRAS-Steuerschaltung, und zum Steuern der Drehzahl des Motors.

16. Regelungssystem, das zum Regeln eines Rotationsverdichters (10) verwendet wird, wobei das Regelungssystem umfasst:
die Drehzahlregelungsvorrichtung (60) nach einem der Ansprüche 1 bis 13; und
eine sensorlose Vektorsteuerschaltung (1), die konfiguriert ist, um einen Drehzahlbefehlswert (ωcmd) zu erfassen, der von der Drehzahlregelungsvorrichtung ausgegeben wird, und eine Drehzahl eines im Rotationsverdichter enthaltenen Motors zu steuern.

17. Drehzahlregelungsverfahren, wobei eine Drehzahlregelungsvorrichtung (60):
einen Drehwinkel eines Motors (18) erfasst, der zum drehbaren Antreiben einer Kurbelwelle (16) zum Antreiben eines Kolbenrotors (13A, 13B) verwendet wird, der zum Verdichten eines Kältemittelgases in einem Zylinder (12A, 12B) in einem Rotationsverdichter (10) verwendet wird, einen Drehzahlbefehlswert (ωcmd) an den Motor entsprechend dem Drehwinkel des Motors (18) ändert,
**gekennzeichnet durch** Bestimmen, die Drehzahl des Motors (18) zu ändern, wenn der Drehwinkel der Kurbelwelle (16) entsprechend dem erfassten Drehwinkel des Motors (18) einen im Voraus bestimmten Schwellenwert eines Drehwinkels der Kurbelwelle (16) erreicht, der entsprechend einem Anstieg der Austrittsmenge eines Kältemittelgases aus einer Hochdruckkammer zu einer Niederdruckkammer im Zylinder während einer Umdrehung der Kurbelwelle (16) eingestellt ist; und
den Drehzahlbefehlswert (ωcmd) an den Motor ändert, wenn bestimmt ist, dass die Drehzahl geändert wird.

## Revendications

1. Dispositif de commande de vitesse de rotation (60) comprenant :
une unité d'acquisition d'information d'angle (61) configurée pour acquérir un angle de rotation d'un moteur (18) utilisé pour entraîner en rotation un vilebrequin (16) pour entraîner un rotor de piston (13A, 13B) utilisé pour comprimer un gaz dans un cylindre (12A, 12B) dans un compresseur rotatif (10) ;
une unité de commande de vitesse de rotation (63) configurée pour modifier une valeur de commande de vitesse de rotation (ωcmd) du moteur,
et **caractérisé en ce qu'**il comprend en outre :
une unité de détermination de commutation de vitesse de rotation (62) configurée pour déterminer le changement de la vitesse de rotation du moteur (18) lorsque l'angle de rotation du vilebrequin (16) sur la base de l'angle de rotation du moteur (18) acquise par l'unité d'acquisition d'information d'angle atteint une valeur de seuil prédéterminée d'un angle de rotation du vilebrequin (16) déterminé en correspondance d'une augmentation de la quantité de fuite d'un gaz réfrigérant d'une chambre haute pression à une chambre basse pression dans le cylindre pendant une rotation du vilebrequin (16) ; et
l'unité de commande de vitesse de rotation (63) change la valeur de commande de vitesse de rotation par rapport au moteur (18) lorsque l'unité de détermination de commutation de vitesse de rotation détermine le changement de la vitesse de rotation.

2. Dispositif de commande de vitesse de rotation (60) selon la revendication 1, dans lequel l'unité de détermination de commutation de vitesse de rotation (62) détermine le changement de la vitesse de rotation du moteur (18) lorsque l'angle de rotation du vilebrequin (16) atteint un angle de rotation prédéterminé déterminé entre 180° et 360° lorsque l'angle de rotation du vilebrequin au point mort haut du rotor de piston (13A, 13B) est déterminé à 0° et qu'une direction de rotation du vilebrequin est déterminée sur une position angulaire positive.

3. Dispositif de commande de vitesse de rotation (60) selon la revendication 1, dans lequel l'unité de détermination de commutation de vitesse de rotation (62) détermine le changement de la vitesse de rotation du moteur (18) lorsque l'angle de rotation du vilebrequin (16) atteint un angle de rotation lorsqu'une différence de pression du gaz réfrigérant entre la chambre haute pression et la chambre basse pression est une valeur de seuil prédéterminée ou supérieure.

4. Dispositif de commande de vitesse de rotation (60) selon la revendication 1, dans lequel l'unité de détermination de commutation de vitesse de rotation (62) détermine le changement de la vitesse de rotation du moteur (18) lorsque l'angle de rotation du vilebrequin (16) atteint un angle de rotation lorsqu'une différence de température entre une température du réfrigérant sur un côté de décharge du compresseur rotatif (10) et une température du réfrigérant sur son côté d'aspiration est une valeur de seuil prédéterminée ou supérieure.

5. Dispositif de commande de vitesse de rotation (60) selon la revendication 1, dans lequel l'unité de détermination de commutation de vitesse de rotation (62) détermine le changement de la vitesse de rotation du moteur (18) lorsque l'angle de rotation du vilebrequin (16) atteint un angle de rotation lorsque la fuite du gaz réfrigérant de la chambre haute pression à la chambre basse pression est une valeur de seuil prédéterminée ou plus.

6. Dispositif de commande de vitesse de rotation (60) selon la revendication 1, dans lequel l'unité de détermination de commutation de vitesse de rotation (62) détermine le changement de la vitesse de rotation du moteur (18) lorsque l'angle de rotation du vilebrequin (16) atteint un angle de rotation lorsqu'un rapport de volume de la chambre haute pression et de la chambre basse pression est un rapport prédéterminé.

7. Dispositif de commande de vitesse de rotation (60) selon la revendication 1, dans lequel l'unité de détermination de commutation de vitesse de rotation (62) détermine le changement de la vitesse de rotation du moteur (18) lorsque l'angle de rotation du vilebrequin (16) atteint un angle de rotation lorsqu'une réaction d'un gaz réfrigérant comprimé reçu par le rotor de piston (13A, 13B) du gaz réfrigérant de la chambre haute pression est une valeur de seuil prédéterminée ou supérieure.

8. Dispositif de commande de vitesse de rotation (60) selon la revendication 1, dans lequel l'unité de détermination de commutation de vitesse de rotation (62) détermine le changement de la vitesse de rotation du moteur (18) lorsque l'angle de rotation du vilebrequin (16) atteint un angle de rotation lorsque la vitesse de rotation du moteur est une valeur de seuil prédéterminée ou inférieure due à une réaction d'un gaz réfrigérant comprimé reçu par le rotor de piston (13A, 13B) du gaz réfrigérant de la chambre haute pression.

9. Dispositif de commande de vitesse de rotation (60) selon l'une quelconque des revendications 1 à 8, dans lequel l'unité de commande de vitesse de rotation (63) augmente la vitesse de rotation du moteur (18) lorsque l'unité de détermination de commutation de vitesse de rotation (62) détermine le changement de la vitesse de rotation du moteur.

10. Dispositif de commande de vitesse de rotation (60) selon l'une quelconque des revendications 1 à 9, dans lequel l'unité de détermination de commutation de vitesse de rotation (62) détermine le changement de la vitesse de rotation du moteur (18) lorsque l'angle de rotation du vilebrequin (16) atteint un angle de rotation lorsque l'angle de rotation du vilebrequin est à un point mort haut du rotor de piston (13A, 13B), et
l'unité de commande de vitesse de rotation (63) diminue la vitesse de rotation du moteur à une vitesse prédéterminée.

11. Dispositif de commande de vitesse de rotation (60) selon l'une quelconque des revendications 1 à 10, dans lequel l'unité de détermination de commutation de vitesse de rotation (62) compare l'information de position du rotor de piston (13A, 13B) dans le cylindre (12A, 12B) sur la base de l'angle de rotation du moteur (18) avec une valeur de seuil déterminée à l'avance pour correspondre à la quantité de fuite du gaz réfrigérant de la chambre haute pression à la chambre basse pression et détermine s'il faut changer la vitesse de rotation du moteur.

12. Dispositif de commande de vitesse de rotation (60) selon l'une quelconque des revendications 1 à 11, dans lequel l'unité d'acquisition d'information d'angle (61) acquiert un angle de rotation du moteur (18) estimé par la commande du système adaptatif de référence à un modèle (MRAS).

13. Dispositif de commande de vitesse de rotation (60) selon l'une quelconque des revendications 1 à 12, dans lequel l'unité de détermination de commutation de vitesse de rotation (62) détermine un changement de la vitesse de rotation du moteur (18) sur la base de la valeur de seuil de l'angle de rotation déterminé sur le même nombre que le nombre de cylindres (12A, 12B) compris dans le compresseur rotatif (10) pendant un processus de compression, et
l'unité de commande de vitesse de rotation (63) augmente la vitesse de rotation du moteur selon le même nombre que le nombre de cylindres pendant un processus de compression sur la base d'une telle détermination.

14. Système de compresseur rotatif, comprenant :
un compresseur rotatif (10) ;
un dispositif de commande de vitesse de rotation (60) selon l'une quelconque des revendications 1 à 13 ; et
un circuit de commande de vecteur sans capteur (1) configuré pour acquérir une valeur de commande de vitesse de rotation (ωcmd) produite par le dispositif de commande de vitesse de rotation et commander la rotation d'un moteur (18) inclus dans le compression rotatif.

15. Système de compresseur rotatif selon la revendication 14, dans lequel le circuit de commande de vecteur sans capteur (1) comprend un circuit de commande de système adaptatif de référence à un modèle (MRAS), et est configuré pour estimer un angle de rotation et une vitesse de rotation du moteur (18) en utilisant le circuit de commande de MRAS et commande la rotation du moteur sur la base de l'angle de rotation estimé (θes) et la vitesse de rotation (ω_M) du moteur.

16. Système de commande utilisé pour commander un compresseur rotatif (10), le système de commande comprenant :
un dispositif de commande de vitesse de rotation (60) selon l'une quelconque des revendications 1 à 13 ; et
un circuit de commande de vecteur sans capteur (1) configuré pour acquérir une valeur de commande de vitesse de rotation (ωcmd) produite par le dispositif de commande de vitesse de rotation et commander la rotation d'un moteur inclus dans le compresseur rotatif.

17. Procédé de commande de vitesse de rotation dans lequel un dispositif de commande de vitesse de rotation (60) :
acquiert un angle de rotation d'un moteur (18) utilisé pour entraîner en rotation un vilebrequin (16) destiné à entraîner un rotor de piston (13A, 13B) utilisé pour comprimer un gaz réfrigérant dans un cylindre (12A, 12B) dans un compresseur rotatif (10), change une valeur de commande de vitesse de rotation (ωcmd) du moteur selon l'angle de rotation du moteur (18),
**caractérisé par** la détermination du changement de la vitesse de rotation du moteur (18) lorsque l'angle de rotation du vilebrequin (16) selon l'angle de rotation acquis du moteur (18) atteint une valeur de seuil prédéterminée d'un angle de rotation du vilebrequin (16) déterminé en correspondance à une augmentation de la quantité de fuite d'un gaz réfrigérant d'une chambre haute pression à une chambre basse pression dans le cylindre pendant une rotation du vilebrequin (16) ; et
change la valeur de commande de vitesse de rotation (ωcmd) du moteur lorsque l'on détermine de changer la vitesse de rotation.
